# EUROPEAN PATENT APPLICATION

(11) **EP 1 712 461 A1**
(43) Date of publication of application: **18.10.2006**
(21) Application number: 05425234.1
(22) Date of filing: 15.04.2005
(51) Int. Cl.: B62L 1/00, F16D 65/092

(54) **Brake pad, brake shoe and mounting method for a bicycle**

(71) Applicant: CAMPAGNOLO S.R.L., 36100 Vicenza (VI) (IT)
(72) Inventor: Dal Pra', Giuseppe, 36010 Zané (Vincenza) (IT); Caiazzo, Marco, 36040 Torri di Quartesolo (Vicenza) (IT)
(74) Representative: Riccardi, Elisa

(57) **Abstract**

To facilitate the mounting procedure of a brake pad (1) in a brake shoe (2), it is provided for the undercut coupling between brake pad (1) and brake shoe (2) not to occur along their entire length. The brake pad (1) can then be mounted in the brake shoe (2) by means of a first movement for bringing at least one undercut section (7; 10) into abutment against a non-undercut section (13; 9), and a second movement of mutual sliding, guided and stabilised by the abutment relationship obtained by the first movement, thus further reducing the risk of damage to the brake pad (1). Also, the second movement of mutual sliding only takes place over a shorter stroke than the full length of the brake pad (1) and the brake shoe (2), which is a particularly advantageous feature when the relative sizes of the cross-sections are such as to create a coupling with mechanical interference.

## Description

The present invention concerns a bicycle brake pad, a brake shoe, a bicycle brake replacement kit and a method of mounting a brake pad in a brake shoe.

A bicycle brake performs its braking action by pressing a pair of brake pads, arranged at the ends of two brake arms, against the lateral surfaces of the rim.

The brake pads are made of high friction coefficient plastic and are housed in an interconnecting component, or brake shoe, which allows to couple and adjust the brake pad to its respective brake arm.

A brake pad of the known type consists of a body of an elongated shape, typically somewhat curved according to the rim curvature, and having a braking side, which in the mounted state faces the rim, and a side for coupling to the brake shoe.

The side for coupling to the brake shoe normally has a dovetail cross-section, as shown for instance in GB 1 276 561, or a T-shaped cross-section, as shown for instance in EP 0 799 762. The dovetail or T-shaped cross-section extends along the whole length of the brake pad and defines two undercut side walls of the brake pad.

The brake shoe on which this brake pad is mounted consists in turn of a body of an elongated shape, typically somewhat curved according to the rim curvature, and having means for coupling to the brake and a side for coupling to the brake pad.

The side of the brake shoe for coupling to the brake pad comprises two undercut side walls, formed by respective cut-outs matching the dovetail cross-section of the brake pad, or by respective edges protruding towards the inside of the brake shoe and defining a groove whose shape matches the T-shaped cross-section of the brake pad.

The brake pad is mounted in the brake shoe by inserting one end of the brake pad, with its undercut shape defined by the dovetail, into the matching undercut shape defined by the edges or side cut-outs of the brake pad. The whole length of the brake pad is then slid into the brake shoe, along the braking direction, until it is fully inserted.

In the present description, and in the attached claims, "braking direction" is meant to indicate the prevailing direction of the area of contact between the brake pad and the rim during braking, that is broadly speaking the longitudinal axis of the brake pad or brake shoe. This direction, which is typically curvilinear, is sometimes more precisely specified as the "braking oriented direction" in which case reference is made to the direction of a braking applied as the bicycle is moving forwards. Lastly, "reverse braking oriented direction" is meant to indicate the oriented direction of braking applied in order to counteract a backward motion of the bicycle - for instance to hold the bicycle stationary on an uphill slope.

The matching undercut shapes of the brake pad and the brake shoe define first retaining means which prevent, in the mounted state, any mutual movement in the planes at right angles to the braking direction, i.e. in a direction essentially parallel to the wheel axle (the brake pad coming out of the brake shoe towards the rim) and in the wheel's radial direction (the brake pad falling out).

When the undercut coupling between brake pad and brake shoe is made with mechanical interference, it also prevents any mutual sliding of the brake pad and the brake shoe, in the mounted state, along the braking direction.

When there is no mechanical interference because the undercut coupling is loose, or in any case when such mechanical interference is insufficient, second retaining means is provided to prevent any mutual sliding of the brake pad and the brake shoe, in the mounted state, along the braking direction.

In a first type of known solution this second retaining means are embodied by the brake pad's forward end in terms of the braking oriented direction abutting against an abutment surface of the corresponding end of the brake shoe. Typically, the abutment surface of the brake shoe is a continuation of its side edges.

On this point it should be stressed that, when braking a forward-moving bicycle, the wheel turns in the braking oriented direction and the abutment surface of the brake shoe counteracts the thrust force in the braking oriented direction that is transmitted to the brake pad by the wheel. Under particular conditions the braking action may take place on a wheel tending to turn the other way, i.e. in the reverse braking oriented direction, as for instance when the cyclist is stationary facing uphill and keeps the brake lever pulled. In this case, however, the braking force required is very much' less than the braking force required when the bicycle is moving forward as described above. Enough retaining force to prevent the brake pad from sliding out of the brake shoe in the reverse braking oriented direction is therefore typically provided solely by the mechanical interference of the undercut coupling between the two; and the greater the mechanical interference between the two matching cross-sections, the better this retaining force.

In other known types of solution the second retaining means is actively effective in both the braking oriented direction and the reverse one, and are embodied by using auxiliary locking elements such as, for instance, screws engaged between the brake pad and the brake shoe, as shown for example in EP 0 799 762 mentioned above, or a split pin inserted through aligned holes formed in the brake shoe and accommodated in a groove formed in the brake pad, as shown for example in EP 1 164 076.

EP 1 164 076, which concerns the composition material of a bicycle brake pad, also illustrates one embodiment in which the side of the brake pad for coupling to the brake shoe has a T-shaped cross-section for essentially all of its length, and a short portion at the rearward end in terms of the braking oriented direction, whose cross-section is rectangular and only as wide as the stem of the T. The brake shoe in that embodiment has a peripheral wall and, in the wall portion at the rearward end in terms of the braking direction, a T-shaped cutout matching the T-shaped cross-section of the brake pad. The document is just limited to stating that the coupling of the brake pad to the brake shoe is conventional.

In known embodiments it is necessary, when mounting the brake pad in the brake shoe, to perfectly align the two components along the braking direction, both at the initial step of inserting the brake pad in the brake shoe from its end, and throughout the subsequent step of mutual sliding. This alignment must be maintained in order to prevent the brake pad from tilting and jamming on the brake shoe, thereby hindering the insertion operation and possibly becoming damaged. Any damage to the brake pad's undercut shape, besides, leads to it being more poorly retained by the brake shoe.

The technical problem underlying the present invention is to make the operations to mount a brake pad in a brake shoe easier.

A secondary object of the invention is reduce the weight of the brake pad and of the brake shoe.

This problem is solved, according to the invention, by providing for the undercut coupling between brake pad and brake shoe not to occur along the whole length of the coupling sides. The brake pad can then be mounted in the brake shoe by means of an initial movement for bringing an undercut section into abutment against a non-undercut section, and a second movement of mutual sliding, guided and stabilised by the abutment relationship obtained through the first movement, thus further reducing the risk of damage to the brake pad. Also, the second movement of mutual sliding only takes place over a stroke shorter than the full length of the brake pad and the brake shoe, which is a particularly advantageous feature when the relative sizes of the cross-sections are such as to create a coupling with mechanical interference.

In a first aspect thereof, the present invention concerns a bicycle- brake pad comprising a braking side and a side for undercut-type coupling to a brake shoe, said coupling side having at least one undercut portion, wherein the coupling side has at least one undercut portion and at least one non-undercut portion. The rearward end in terms of the braking oriented direction of one non-undercut portion adjoins an undercut portion.

In the present description, and in the attached claims, "undercut portion" and "non-undercut portion", respectively, when used with reference to a brake pad and a brake shoe, mean a certain length of the component concerned in which at least one of the side walls is undercut and non-undercut, respectively.

Preferably, said at least one non-undercut portion is an intermediate portion.

In the present description, and in the attached claims, "intermediate portion" is meant to indicate a portion which does not extend to either extremity, but is not at all meant to be restricted to a central portion equidistant from the two ends.

Preferably, said at least one non-undercut portion is a portion having a cross-section contained within a cross-section of said at least one undercut portion. In this way the non-undercut portion of the brake pad can be inserted into an undercut portion of the brake shoe and aids to slide the brake pad into the brake shoe.

The non-undercut portion may moreover be tangent to the matching undercut portion of the brake shoe when in an intermediate configuration during mounting, so as to enhance the guiding of the brake pad into the brake shoe.

In one embodiment, the said non-undercut portion is a material-free portion of the coupling side. In this embodiment, which is particularly advantageous for the purpose of saving weight, the guiding of the brake pad into the brake shoe is carried out by the undercut portions of the brake pad which are tangent to non-undercut portions of the brake shoe.

The brake pad is typically elongated in a braking direction, and slightly curved.

In one particularly preferable embodiment, the brake pad comprises two undercut end portions and one non-undercut central portion.

The forward end in terms of the braking oriented direction, which typically also has to absorb the dragging force from the wheel by abutting against a shoulder on the brake shoe, in this case is advantageously of the maximum cross-section and well anchored to the brake shoe, thus improving the transmission of the stress to the brake shoe. Furthermore, the brake pad's rearward end in terms of the braking direction is also at an undercut portion. The only portion of the brake pad that is less well anchored is the central one, which is less easily liable to the risk of detaching.

In another of the preferred embodiments the brake pad comprises two undercut portions and two non-undercut portions; in alternation.

In another of the preferred embodiments the brake pad comprises three undercut portions and two non-undercut portions, in alternation.

The relative sizes of the undercut and non-undercut portions are such as to allow, when in an intermediate configuration during mounting of the brake pad in the brake shoe, at least one undercut portion of the brake pad to be inserted into a non-undercut portion of the brake shoe, or, vice versa, at least one non-undercut portion of the brake pad to be inserted into an undercut portion of the brake shoe. Preferably, their relative sizes are such as to allow, when in an intermediate configuration during mounting of the brake pad in the brake shoe, at least one undercut portion of the brake pad to be inserted into a non-undercut portion of the brake shoe and at least one non-undercut portion of the brake pad to be inserted into an undercut portion of the brake shoe.

In one particularly advantageous embodiment, said at least one undercut portion and said at least one non-undercut portion are of equal length in the braking direction.

Preferably, the said undercut portions are dovetail-shaped.

Preferably, said at least one non-undercut portion is of a rectangular cross-section whose cross-size is less than or equal to the minimum cross-size of the dovetail.

Alternatives to a dovetail cross-section are T-shaped cross-sections, L-shaped cross-sections, or C-shaped cross-sections.

The said undercut portions are preferably sized for coupling with mechanical interference in matching undercut portions of the brake shoe. In this way, in addition to providing the retention in the plane orthogonal to the braking direction, the undercut coupling to the brake shoe provides a certain retention degree in the braking direction as well.

Alternatively, the undercut portions are sized for a loose coupling in the matching undercut portions of the brake shoe.

The brake pad of the invention can in any case be equipped with retaining means in the braking direction.

The retaining means in the braking direction may comprise a face at the forward end in terms of the braking oriented direction suitable to abut against a shoulder of the brake shoe.

Alternatively or additionally, the retaining means in the braking direction may comprise a groove for a split pin at right angles to the braking direction, which is accommodated in holes in the brake shoe, or a hole for accommodating a screw or nail at right angles to the braking direction, again accommodated in a hole in the brake shoe.

The brake pad's braking side is typically made of any high-friction material, and may have a smooth, structured and/or grooved surface in contact with the rim, for draining away water and impurities.

In a second aspect thereof, the invention concerns a bicycle brake shoe comprising means for coupling to the brake and a side for undercut-type coupling to a brake pad, characterised in that the side for coupling to the brake pad comprises at least one undercut portion and at least one non-undercut portion.

In one embodiment, in said at least one non-undercut portion, the brake shoe has two oblique side walls., forming a flared seating.

In alternative embodiments, in said at least one non-undercut portion, the brake shoe comprises only the lower side wall, or only the upper side wall.

Typically, moreover, the brake shoe comprises an abutment to stop the brake pad at its forward end in terms of the braking oriented direction.

Typically, the means for coupling to the brake comprises a protruding threaded pin.

Typically, the brake shoe further comprises an oblique flange to guide the wheel during mounting of the latter.

In a third aspect thereof, the present invention concerns a replacement kit for a bicycle brake, comprising a brake pad as described above and/or a brake shoe as described above.

When said at least one non-undercut portion of the brake pad is a material-free portion of the brake pad's coupling side, the kit further includes a shim suitable to be inserted between the brake pad and the brake shoe at said at least one non-undercut portion of the brake pad.

In a fourth aspect thereof, the present invention concerns a bicycle brake comprising a brake pad as described above and/or a brake shoe as described above.

In a fifth aspect thereof, the present invention concerns a method of mounting a brake pad in a bicycle brake shoe of a bicycle brake, comprising the steps of:
providing a brake pad comprising a braking side and a side for undercut-type coupling to a brake shoe, and a brake shoe comprising means for coupling to the brake and a side for undercut-type coupling to the brake pad, the coupling side faces of at least one of the brake pad or the brake shoe having at least one non-undercut portion,
aligning said non-undercut portion with an undercut portion of the other of the brake pad and the brake pad brake shoe,
inserting the brake pad into the brake shoe in a direction at right angles to a braking direction, and
sliding the brake pad in the brake shoe in the braking direction.

More specifically, said sliding step comprises sliding the brake pad into the brake shoe in the braking oriented direction.

More specifically, said sliding step comprises sliding the brake pad into the brake shoe until at least one undercut portion of the brake pad is inserted into at least one undercut portion of the brake shoe, and at least one non-undercut portion of the brake pad is inserted into at least one non-undercut portion of the brake shoe.

In a preferred embodiment, the brake pad and the brake shoe each have at least two undercut portions and at least one non-undercut portion, and the aligning step comprises aligning at least one non-undercut portion of the brake pad with an undercut portion of the brake shoe, and at least one undercut portion of the brake pad with a non-undercut portion of the brake shoe.

Preferably, the sliding step comprises bringing a forward end in terms of the braking direction of the brake pad into abutment against an abutment shoulder of the brake shoe.

The mounting method may further comprise the step of locking the brake pad to the brake shoe in the braking direction by means of a split pin, a screw or a nail.

Features and advantages of the invention will now be illustrated with reference to particular embodiments which are shown by way of a non-limiting example in the attached drawings, wherein:
- Fig. 1 shows an isometric view of a bicycle brake, with brake pads and brake shoes mounted;
- Fig. 1A shows a plan view of the brake shown in Fig. 1;
- Fig. 2 shows an exploded isometric view of the brake pad and brake shoe of a first embodiment of the invention;
- Fig. 3 shows a plan view of the brake shoe shown in Fig. 2;
- Fig. 4 shows a plan view of the brake pad shown in Fig. 2;
- Fig. 5 shows the brake pad and brake shoe shown in Fig. 2, at an intermediate mounting step;
- Fig. 6 shows the brake pad and the brake shoe, in a fully mounted state;
- Fig. 7 shows a cross-section view along axis VII-VII of Fig. 6;
- Fig. 8 shows a cross-section view along axis VIII-VIII of Fig. 6;
- Fig. 9 shows a cross-section view along axis IX-IX of Fig. 5;
- Fig. 10 shows a cross-section view along axis X-X of Fig. 5;
- Fig. 11 shows an exploded isometric view of the brake pad and brake shoe of a second embodiment of the invention;
- Fig. 12 shows the brake pad and the brake shoe shown in Fig. 11, at an intermediate mounting step;
- Fig. 13 shows an exploded isometric view of a third embodiment of the invention;
- Fig. 14 shows the brake pad and the brake shoe shown in Fig. 13, at an intermediate mounting step;
- Fig. 15 shows an exploded isometric view of a fourth embodiment of the invention;
- Fig. 16 shows an exploded isometric view of a fifth embodiment of the invention;
- Fig. 17 shows an exploded isometric view of a sixth embodiment of the invention.

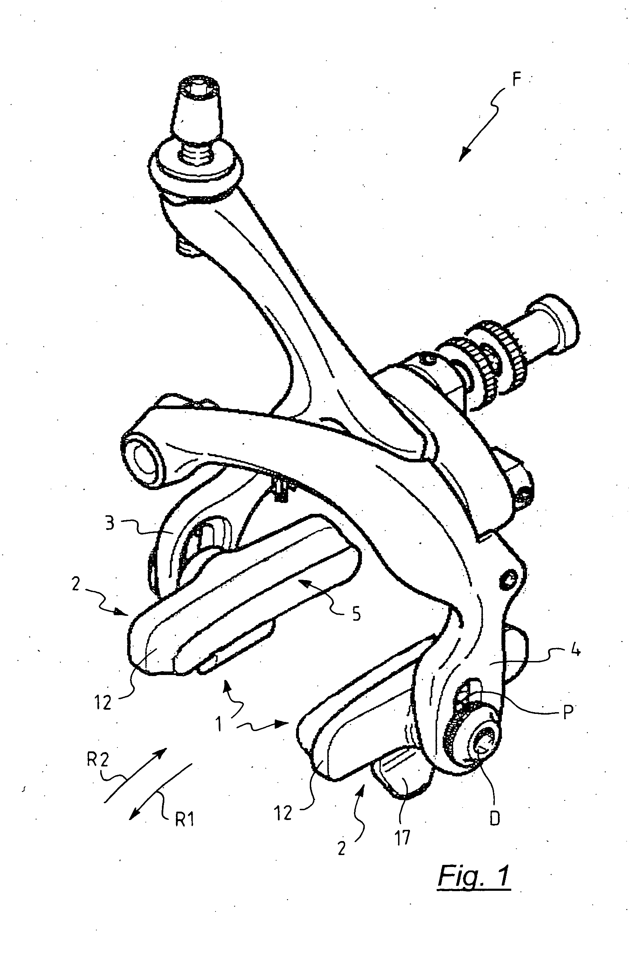

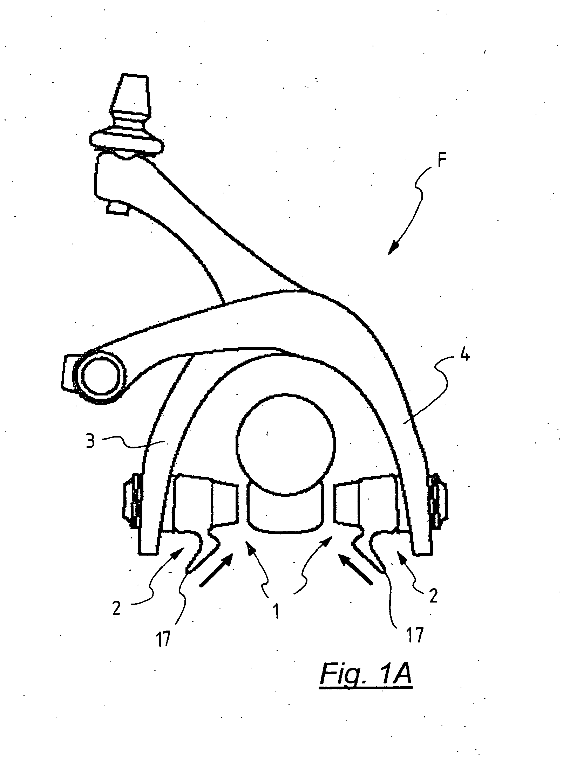

Fig. 1 shows a brake F, for racing bicycles, in which a pair of brake pads 1 with their respective brake shoes 2 are connected to the arms 3, 4 of the brake F, by means of a respective pin P with a threaded end onto which a locking nut D is tightened.

It is understood that the brake could be of any type, such as, for instance, a center pull or a side pull brake for straight-handlebar bicycles.

The brake pads 1 and brake shoes 2 are wholly the mirror image of one another, and accordingly only the brake pad illustrated on the left in Fig. 1 will be shown and described below.

The brake pad 1 consists of a body of a high friction coefficient material, typically elongated in shape and slightly curved according.to the profile of the rim.

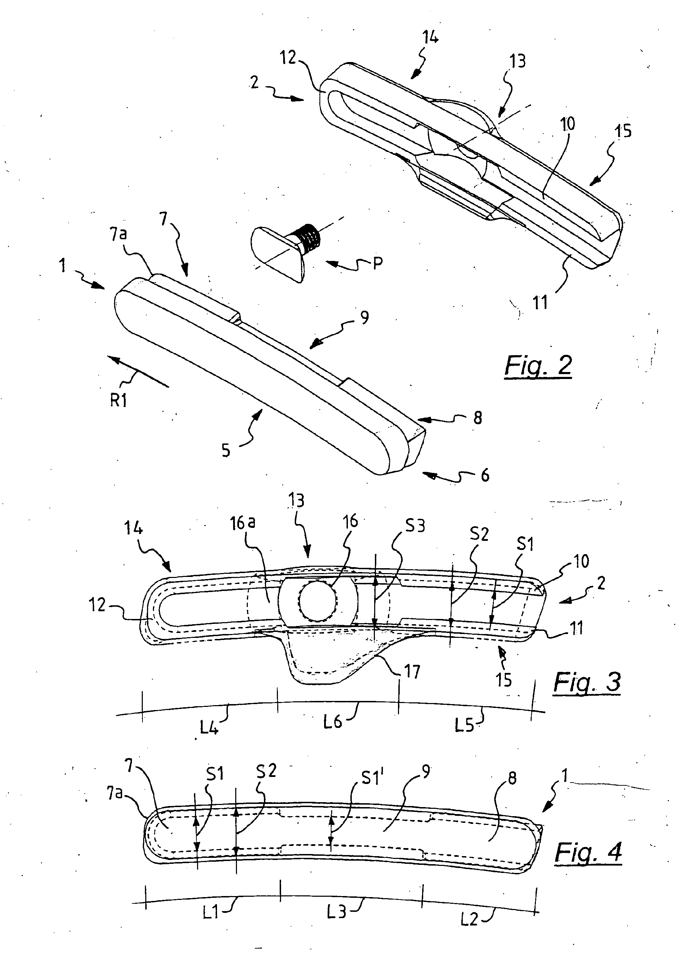

The brake pad 1 has a braking side 5, which faces the rim in the mounted state, and a side 6 for coupling to the brake shoe 2 (Fig. 2).

The exposed face of the braking side 5 is shown as smooth, but in different embodiments it could have one or more grooves for draining away water and impurities so as to increase the braking efficiency, especially in wet conditions.

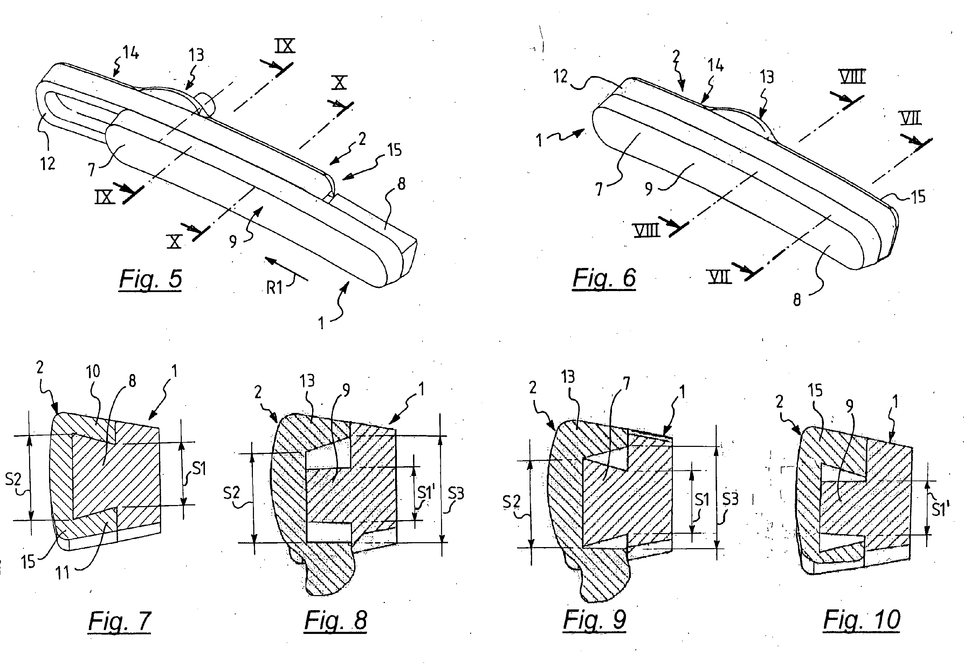

According to a first embodiment shown in Figs. 2 to 10, the side 6 for coupling to the brake shoe 2 has two end portions 7, 8 with a dovetail cross-section and a central portion 9 with an essentially rectangular cross-section smaller than the two end portions, as seen in particular in Figs. 7 to 10.

The dovetail cross-section passes from a minimum width S1 to a maximum width S2 (Fig. 7, 9), while the size of the central portion 9 is essentially uniform and amounts to a minimum size S1' (Fig. 8, 10). The minimum size S1' of the central portion 9 is slightly less than the minimum size S1 of the dovetail cross-section. In different implementing versions, the sizes could also be equal.

In implementing versions, the narrower cross-section of the central portion 9 could be different, provided it is contained within the cross-section of the end portions 7,8.

The end portions 7, 8 and the central portion 9 extend over lengths L1, L2 and L3 respectively, as shown in Fig. 4.

In the present embodiment L1, L2 and L3 are all essentially equal between them.

The brake shoe 2 likewise consists of an elongated body typically slightly curved according to the profile of the rim.

The brake shoe 2 has means for coupling to the brake, and a side for coupling to the brake pad 1.

On the side for coupling to the brake pad, the brake shoe 2 comprises two side walls 10, 11 and an abutment end wall 12 consisting of the continuation of the two side walls 10, 11.

In the two end portions 14 and 15 of the brake shoe 2, the side walls 10, 11 are oblique and converge in the direction towards the brake pad 1. Thus, the end portions 14 and 15 of the brake shoe 2 are undercut portions whose cross-section matches the dovetail profile of the two end portions 7, 8 of the brake pad 1, as seen in Fig. 7. The size of the seat between the side walls 10, 11 in the end portions 14 and 15 ranges between S1 and S2 or between values slightly greater than S1 and S2.

The brake shoe 2 has a central portion 13 in which the side walls 10, 11 are oblique and instead diverge in the direction towards the brake pad 1. Thus, the cross-section of the central portion 13 of the brake shoe 2 is flared, the maximum size S3 of the seat for the brake pad 1 being greater than S2 (Fig. 8, 9).

Alternatively, in the central portion 13, the side walls 10, 11 can be straight, the size of the seat for the brake pad 1 being uniform, and equal to or just greater than S2.

The end portions 14, 15 and the central portion 13 of the brake shoe 2 extend over lengths L4, L5 and L6 respectively, as shown in Fig. 3.

In the present embodiment, L4, L5 and L6 are essentially equal between them, and to L1, L2, and L3.

The means for coupling to the brake F of the brake shoe 2 comprises a through-hole 16. with a countersink 16a formed in the bottom of the brake shoe 2, for accommodating the said pin P for locking to the arm 3, 4 of the brake F.

The pin P has a wider head and is inserted, during mounting, into the hole 16, with its wider head abutting the countersink 16a of hole 16 of the brake shoe.

In different embodiments the pin P could be an integral part of the brake shoe, for instance co-moulded or glued or screwed to the brake shoe 2.

Finally, the brake shoe 2 illustrated here has an optional flange 17 protruding downwards for guiding the wheel between the arms 3, 4 of the brake F. The two flanges 17 of the two brake shoes 2, as seen in Fig. 1A, in fact form converging guide surfaces which guide the rim and the wheel tire between the two brake pads 1 when the wheel is mounted to the bicycle frame.

Before mounting the brake pad 1 in the brake shoe 2, the pin P is inserted into the hole 16 with its head abutting in the countersink 16a, or is glued or screwed to the brake shoe 2, in other embodiments.

To mount the brake pad 1 in the brake shoe 2, the brake pad is first faced to the brake shoe 2 (Fig. 2) with its first undercut end portion 7 aligned with the wider central portion 13 of the brake shoe 2, and with the narrow cross-section non-undercut central portion 9 aligned with the undercut end portion 15 of the brake shoe 2.

Next, the brake pad 1 is inserted, with a movement at right angles to the braking direction R1, into the brake shoe 2 (configuration shown in Fig. 5).

Advantageously, this movement of insertion at right angles to the braking direction R1 is guided by the flared configuration of the central portion 13 of the brake shoe.

This configuration brings the undercut portion 7 of the brake pad 1 into abutment against a non-undercut portion 13 of the brake shoe 2, as shown in Fig. 9, and a non-undercut portion 9 of the brake pad 1 into abutment against an undercut portion 15 of the brake shoe 2, as shown in Fig. 10.

More specifically, the abutment occurs at the bottom of the brake shoe 2 and along the corners at the points of maximum size S2 of the brake pad 1 and of minimum size S1 or slightly greater of the brake shoe 2.

Moreover, the brake pad 1 abuts against the brake shoe 2 for a large proportion of their respective lengths (essentially two thirds, in the preferred instance where the portions are all of equal length), thus ensuring good stability. In other words any tilting or jamming of the brake pad 1 with respect to the brake shoe 2, and any possible damage thereto, is avoided, during the subsequent movement for completing the mounting.

From this configuration of insertion and abutment as shown in Fig. 5, the brake pad 1 is in fact slidingly pushed along the braking oriented direction R1 towards the abutment front wall 12 of the brake shoe 2 until it is fully inserted into the brake shoe 2 and abuts against the abutment front wall 12 (final configuration shown in Figs. 1 and 6).

Furthermore, this second, mutual sliding movement takes place just for a shorter stroke than the full length of the coupling sides of the brake pad 1 and the brake shoe 2, which is a particularly advantageous feature when the relative sizes of their cross-sections are such as to create a coupling with mechanical interference, and the sliding is accordingly forced.

Manifestly, for insertion and sliding of the brake pad 1 in the brake shoe 2 to be possible there are certain particular geometrical conditions which will have to be satisfied. In addition to the constraints on the cross-sizes S1', S1, S2, and S3 mentioned above, at least the relationships L6>=L1 and L3>=L5 will have to be satisfied.

The optimum situation is where all the lengths L1-L6 are equal, as indicated above.

As can be seen in Fig. 7, when the brake pad 1 is inserted into the brake shoe 2, the dovetail coupling prevents any mutual movement between brake pad and brake shoe at right angles to the braking direction R1.

The locking of brake pad 1 to brake shoe 2 which prevents any mutual sliding along the braking oriented direction R1 is ensured, as seen in particular in Figs. 1 and 6, by the brake pad 1 abutting against the abutment front wall 12 of the brake shoe 2, and by the undercut coupling itself, where this is implemented with mechanical interference.

When the wheel is tending to turn in the reverse direction, for instance when the cyclist is stationary facing uphill with the brake pulled, sufficient retention of the brake pad against sliding out of the brake shoe in the reverse braking oriented direction is typically provided by the undercut coupling of the two components, and the greater the mechanical interference between the two matching undercut cross-sections, the better the retaining force.

It is worth emphasizing that the forward end 7a of the brake pad 1 in terms of the braking oriented direction R1, which must also absorb the dragging force from the wheel by abutting against the abutment wall 12 of the brake shoe 2, is in the dovetail portion 7 and accordingly advantageously has a large cross-section and is well anchored to the brake shoe 2, thus improving the transmission of the stress to the brake shoe 2.

Furthermore, the rearward end also of the brake pad 1 in terms of the braking oriented direction R1 is a dovetail portion, in portion 8. The only less well anchored portion of the brake pad 1 is the central one, which is less easily liable to the risk of detaching.

The alternative embodiments of the present invention will be described only in those respects where they differ from the first embodiment described above. It is also understood that the possible variations listed above for, the first embodiment are also applicable to the following embodiments.

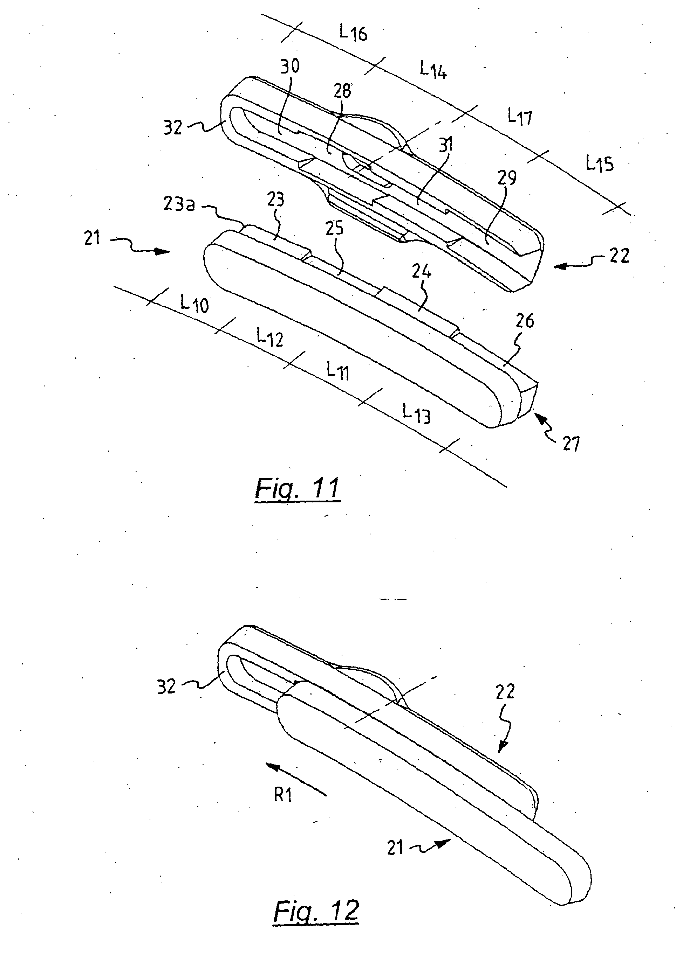

Figs. 11 and 12 show a second embodiment of the invention.

The side 27 of the brake pad 21 for coupling to the brake shoe 22 has two dovetail portions 23, 24 in alternation with two non-undercut, narrower portions 25, 26, said portions 23-26 having corresponding lengths L10, L11, L12 and L13.

The brake shoe 22 likewise has two flared portions 28, 29 in alternation with two undercut portions 30, 31, said portions 28-31 having corresponding lengths L14, L15, L16 and L17.

The procedure for mounting the brake pad 21 in the brake shoe 22 involves, upon insertion of the pin P into the hole 16 with its head abutting in the countersink 16a, facing the brake pad 21 to the brake shoe 22 (Fig. 11) with the dovetail portions 23, 24 aligned with the flared portions 28 and 29 of the brake shoe 22, and with the narrower, non-undercut, portion 25 aligned with the undercut portion 31 of the brake shoe 22.

The brake pad 21 is then inserted, with a movement at right angles to the braking direction R1, into the brake shoe 22 (configuration shown in Fig. 12). In this situation the brake pad 21 abuts against the brake shoe 22 for about three quarters of their respective lengths, thus ensuring good stability and a good guide for the subsequent sliding movement of the brake pad 21 along the braking oriented direction R1 towards the abutment front wall 32 of the brake shoe 22, until it is fully inserted into the brake shoe 22, with the forward end 23a in terms of the braking oriented direction R1 into abutment.

Manifestly, for insertion and sliding of the brake pad 2.1 in the brake shoe 22 to be possible, at least the conditions L14>=L10, L12>=L17 will have to be satisfied.

The optimum situation is where all the lengths L10-L17 are equal.

If the above geometrical conditions are not satisfied, it will be possible, in the intermediate configuration during mounting, to align the dovetail portion 23 of the brake pad 21 with the flared portion 29 of the brake shoe 22, although the abutment and guiding functions will in this way be reduced.

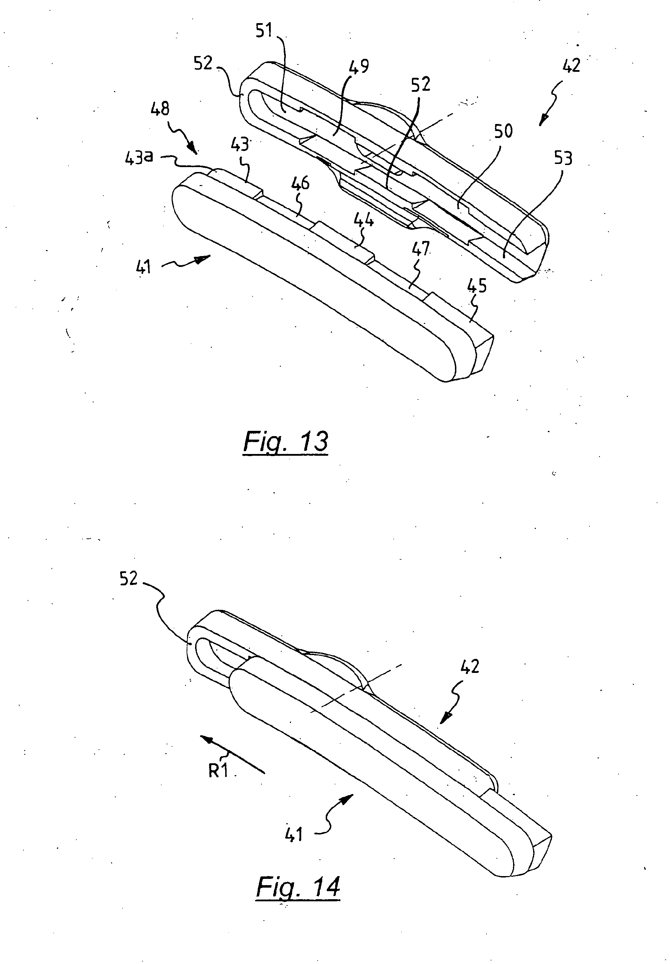

Figs. 13 and 14 show a third embodiment of the invention.

The side 48 of the brake pad 41 for coupling to the brake shoe 42 has three dovetail portions 43, 44 and 45 in alternation with two narrower, non-undercut portions 46, 47.

The brake shoe 42 likewise has two flared portions 49, 50 alternating with three undercut portions 51, 52, 53.

The procedure for mounting the brake pad 41 in the brake shoe 42 involves, upon insertion of the pin P into the hole 16 with its head abutting in the countersink 16a, facing the brake pad 41 to the brake shoe 42 (Fig. 13) with the dovetail portions 43 and 44 aligned with the flared portions 49 and 50 of the brake shoe 42 and with the narrower, non-undercut portions 46 and 47 aligned with the undercut portions 52, 53 of the brake shoe 42.

The brake pad 41 is then inserted, with a movement at right angles to the braking direction R1, into the brake shoe 42 (configuration shown in Fig. 14). In this situation the surfaces where the brake pad 41 abuts against the brake shoe 42 amount to about four fifths of their respective lengths, thus ensuring good stability and a good guide. The brake pad 41 is then slidingly pushed along the braking oriented direction R1 towards the abutment front wall 52 of the brake shoe 2 until it is fully inserted and its forward end 43a is abutting.

In this case also, if the relative lengths of the various portions of the brake pad 41 and the brake shoe 42 do not allow their alignment as described above in the intermediate mounting configuration, it will be possible to align only the dovetail portion 43 of the brake pad 41 with the flared portion 50 of the brake shoe 42, and the non-undercut portion 46 of the brake pad 41 with the undercut portion 53 of the brake shoe 42, although the abutment guiding function will in this way be reduced.

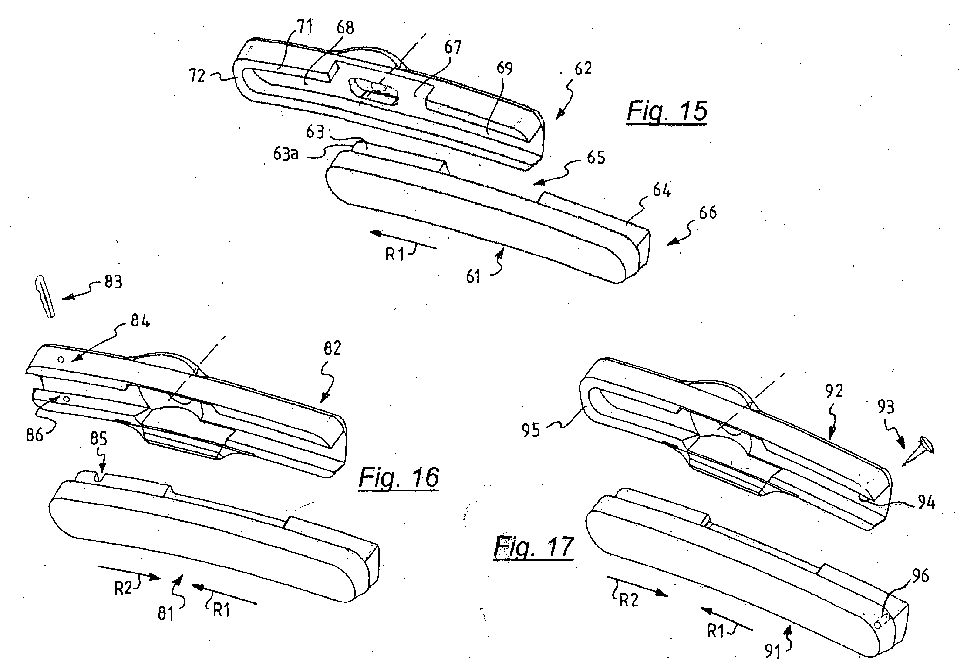

Fig. 15 shows a fourth embodiment of the invention.

The side 66 of the brake pad 61 for coupling to the brake shoe 62 has two dovetail end portions 63, 64 and one non-undercut central portion 65, like the first embodiment described above. In this case, however, the non-undercut central portion 65 is material-free, i.e. the cross-section of the surface of the central portion 65 is null.

The brake shoe 62 has two undercut end portions 68 and 69 and a non-undercut central portion 67, where the upper side wall 71 is missing as originally made, or is removed.

Upon insertion of the pin P into the hole 16 with its head abutting in the countersink 16a, the brake pad 61 can then be mounted in the brake shoe 62 exactly in the same manner as the first embodiment described above.

According to an alternative mounting method it is also possible, however, to arrange the brake pad 61 above the brake shoe 62, again with the dovetail portion 63 aligned with the non-undercut portion 67 of the brake shoe 62 and with the null cross-section central portion 65 aligned with the undercut portion 69 of the brake shoe 62, and to insert the brake pad 61, again with a movement at right angles to the braking direction R1 but this time in the vertical direction, i.e. at right angles to the insertion movement of the first embodiment.

In this case also, from this condition where the brake pad 1 abuts against the brake shoe 2 for about two thirds of their respective lengths, the brake pad 61 is then slidingly pushed along the braking oriented direction R1 towards the abutment front wall 72 of the brake shoe 62 until it is fully inserted and abuts with its forward end 63a.

To improve the braking efficiency, once the brake pad 61 has been inserted in the brake shoe 62 provision can be made for adding a shim from the area where the edge 71 is missing, to fill the area corresponding to the null cross-section central portion 65 of the brake pad 62.

In a different implementing version, provision can be made for the side wall of the brake shoe that is missing in the non-undercut central portion to be the lower one instead of the upper one.

Of course, the concept illustrated here of a material-free non-undercut portion can also be applied to the other embodiments having a different number of undercut and non-undercut portions.

Fig. 16 shows a fifth embodiment of the invention, which differs from the first embodiment in that the abutment front wall 12 of the brake shoe 82 is absent.

The locking of brake pad 81 to brake shoe 82 which prevents any mutual sliding along the braking oriented direction R1, and also along the reverse braking oriented direction R2, is achieved by means of a split pin 83 extended through a hole 84 in the upper side wall of the brake shoe 82 and a hole 86 in the lower side wall of the brake shoe 82, and along a groove 85 formed in the brake pad 81, extended in a direction at right angles to the braking direction R1.

Once the brake pad 81 has been inserted into the brake shoe 82 in accordance with the mounting procedure described for the first embodiment, the split pin 83 is inserted through the upper hole 84 of the brake shoe 82, slid along the groove 85 of the brake pad 81, and then engaged in the lower hole 86 of the brake shoe 82.

It is worth emphasizing that in this case it is not necessary to have mechanical interference between the dovetail portions of the brake pad 81 and the undercut portions of the brake shoe 82, rather the undercut coupling can be loose.

Of course, the version illustrated here can also be applied to the embodiments having a different number of undercut and non-undercut portions.

Fig. 17 shows a sixth embodiment of the invention, which differs from the first embodiment in that the locking of the brake pad 91 to the brake shoe 92 which prevents any mutual sliding along the reverse braking oriented direction R2 is achieved by means of a locking screw 93 screwed into a hole 96 in the brake pad 91 through a hole 94 in the brake shoe 92.

Once the brake pad 91 has been inserted into the brake shoe 92 in accordance with the mounting procedure described for the first embodiment, the screw 93 is inserted into the hole 94 of the brake shoe 92 and threadedly engaged with the plastic material of which the brake pad 91 is made, in the hole 96 of the latter.

In the case of this embodiment also, it is unnecessary to have mechanical interference between the dovetail portions of the brake pad 91 and the undercut portions of the brake shoe 92.

The abutment front wall 95 of the brake shoe 92 may also be absent, in which case the screw 93 is also required to perform the function of retaining the brake pad 91 in the brake shoe 92 in the braking oriented direction R1.

Of course, the version illustrated here can also be applied to the embodiments having a different number of undercut and non-undercut portions.

It is worth emphasizing that, in all the embodiments described, the cross-section of the non-undercut portions could take different shapes and areas, including being material-free as, is the case of the fifth embodiment.

Furthermore, all the embodiments described allow the brake pad and the brake shoe to abut against and guide each other for a certain length before the sliding step, thus greatly increasing the stability and ease of sliding compared with the prior art, where the insertion is made from the end so that, especially during the initial sliding step, the abutment and guide surfaces between brake pad and brake shoe are minimum.

Finally, the non-undercut portions of the brake pad and of the brake shoe help reducing the weight of the two components and accordingly that of the brake as a whole.

Although not illustrated, it is manifest that the number of undercut and non-undercut portions of the brake pad and the brake shoe could be greater than five, or less than three, it being sufficient for even just one of the components, the brake pad or the brake shoe, to have one non-undercut portion, to bring one undercut portion of the other component into abutment and guiding relationship thereto, during the first mounting movement.

Obviously the invention is intended for bicycle brakes made of any material having suitable characteristics for the parts concerned.

In the various embodiments illustrated, the dovetail cross-section could be replaced by a T-shaped cross-section, an L-shaped cross-section, or a C-shaped cross-section, or by any other undercut cross-section.

## Claims

1. Brake pad (1; 21; 41; 61; 81; 91) for a bicycle brake, comprising a braking side (5) and a side (6; 27; 48; 66) for undercut-type coupling to a brake shoe (2; 22; 42; 62; 82; 92), **characterised in that** said coupling side (6; 27; 48; 66) has at least one undercut portion (7, 8; 23, 24; 43-45; 63, 64) and at least one non-undercut portion (9; 25, 26; 46, 47; 65), wherein the rearward end in terms of a braking oriented direction (R1) of a non-undercut portion (9; 25; 46, 47; 65) adjoins an undercut portion (8; 24; 44, 45; 64).

2. Brake pad (1; 21; 41; 61; 81; 91) according to Claim 1, **characterised in that** said at least one non-undercut portion (9; 25; 46, 47; 65) is an intermediate portion.

3. Brake pad (1; 21; 41; 61; 81; 91) according to Claim 1 or 2, **characterised in that** it has a body elongated in a braking direction (R1, R2).

4. Brake pad (1; 21; 41; 61; 81; 91) according to Claim 3, **characterised in that** the elongated body is slightly curved.

5. Brake pad (1; 21; 41; 81; 91) according to any of the preceding claims, **characterised in that** said at least one non-undercut portion (9; 25, 26; 46, 47) is a portion having a cross-section contained within the cross-section of that of said at least one undercut portion (7, 8; 23, 24; 43-45).

6. Brake pad (61) according to any of Claims 1-4, **characterised in that** said non-undercut portion (65) is a material-free portion of the coupling side (66).

7. Brake pad (1; 61; 81; 91) according to any of the preceding claims, **characterised in that** it comprises two undercut end portions (7, 8; 63, 64) and a non-undercut central portion (9; 65).

8. Brake pad (21) according to any of Claims 1-6, **characterised in that** it comprises two undercut portions (23, 24) and two non-undercut portions (25, 26), in alternation.

9. Brake pad (41) according to any of Claims 1-6, **characterised in that** it comprises three undercut portions (43-45) and two non-undercut portions (46, 47), in alternation.

10. Brake pad (1; 21; 41; 61; 81; 91) according to any of the preceding claims, **characterised in that** the relative sizes of said at least one undercut portion (7, 8; 23, 24; 43-45; 63, 64) and said at least one non-undercut portion (9; 25, 26; 46, 47; 65) are such as to allow, when in an intermediate configuration during mounting of the brake pad (1; 21; 41; 61; 81; 91) in the brake shoe (2; 22; 42; 62; 82; 92), at least one undercut portion (7; 23, 24; 43, 44; 63) of the brake pad (1; 21; 41; 61; 81; 91) to be inserted in a non-undercut portion (13; 28, 29; 49, 50; 67) of the brake shoe (2; 22; 42; 62; 82; 92), or vice versa at least one non-undercut portion (9; 25; 46, 47; 65) of the brake pad (1; 21; 41; 61; 81; 91) to be inserted in an undercut portion (10; 31; 52, 53; 69) of the brake shoe (2; 22; 42; 62; 82; 92).

11. Brake pad (1; 21; 41; 61; 81; 91) according to any of the preceding claims, **characterised in that** the relative sizes of said at least one undercut portion (7, 8; 23, 24; 43-45; 63, 64) and said at least one non-undercut portion (9; 25, 26; 46, 47; 65) are such as to allow, when in an intermediate configuration during mounting of the brake pad (1; 21; 41; 61; 81; 91) in the brake shoe (2; 22; 42; 62; 82; 92), at least one undercut portion (7; 23, 24; 43, 44; 63) of the brake pad (1; 21; 41; 61; 81; 91) to be inserted in a non-undercut portion (13; 28, 29; 49, 50; 67) of the brake shoe (2; 22; 42; 62; 82; 92) and at least one non-undercut portion (9; 25; 46, 47; 65) of the brake pad (1; 21; 41; 61; 81; 91) to be inserted in an undercut portion (10; 31; 52, 53; 69) of the brake shoe (2; 22; 42; 62; 82; 92).

12. Brake pad (1; 21; 41; 61; 81; 91) according to any of the preceding claims, **characterised in that** said at least one undercut portion (7, 8; 23, 24; 43-45; 63, 64) and said at least one non-undercut portion (9; 25, 26; 46, 47; 65) are of equal length (L1-L3, L10-L13) in the braking direction (R1, R2).

13. Brake pad (1; 21; 41; 61; 81; 91) according to any of the preceding claims, **characterised in that** said at least one undercut portion (7, 8; 23, 24; 43-45; 63, 64) is dovetail-like.

14. Brake pad (1; 21; 41; 81; 91) according to Claim 13, **characterised in that** said at least one non-undercut portion (9; 25, 26; 46, 47) is of rectangular cross-section whose cross-size (S1') is not greater than the minimum cross-size (S1) of the dovetail.

15. Brake pad (1; 21; 41; 61; 81; 91) according to any of Claims 1-12, **characterised in that** said at least one undercut portion has a cross-section selected from a T-shaped cross-section, an L-shaped cross-section, or a C-shaped cross-section.

16. Brake pad (1; 21; 41; 61; 81; 91) according to any of the preceding claims, **characterised in that** said at: least one undercut portion (7, 8; 23, 24; 43-45; 63, 64) is sized for coupling with mechanical interference in a matching undercut portion (14, 15; 30, 31; 51-53; 68, 69) of the brake shoe (2; 22; 42; 62; 82; 92).

17. Brake pad (1; 21; 41; 61; 81; 91) according to any of Claims 1-15, **characterised in that** said at least one undercut portion (7, 8; 23, 24; 43-45; 63, 64) is sized for loose coupling in a matching undercut portion (14, 15; 30, 31; 51-53; 68, 69) of the brake shoe (2; 22; 42; 62; 82; 92).

18. Brake pad (1; 21; 41; 61; 81; 91) according to any of the preceding claims, **characterised in that** it comprises retaining means (7a; 23a; 43a; 63a; 85; 96) in the braking direction (R1, R2).

19. Brake pad (1; 21; 41; 61; 91) according to Claim 18, **characterised in that** the retaining means in the braking direction comprise a forward end (7a; 23a; 43a; 63a) in terms of the braking oriented direction (R1), suitable to abut against a shoulder (12; 32; 52; 72; 95) of the brake shoe (2; 22; 42; 62; 82; 92).

20. Brake pad (1; 21; 41; 61; 81; 91) according to any of Claims 18-19, **characterised in that** the retaining means in the braking direction (R1, R2) comprise a groove (85) accommodating a split pin (83) at right angles to the braking direction (R1, R2).

21. Brake pad (1; 21; 41; 61; 81; 91) according to any of Claims 18-19, **characterised in that** the retaining means in the braking direction (R1, R2) comprises a hole (96) for accommodating a screw or a nail (93) at right angles to the braking direction (R1, R2).

22. Bicycle brake shoe (2; 22; 42; 62; 82; 92) comprising means (16, 16a, P) for coupling to the brake (F) and a side for undercut-type coupling to a brake pad (1; 21; 41; 61; 81; 91), **characterised in that** the coupling side comprises at least one undercut portion (14, 15; 30, 31; 51-53; 68, 69) and at least one non-undercut portion (13; 28, 29; 49, 50; 67).

23. Brake shoe (2; 22; 42; 82; 92) according to Claim 22, **characterised in that** in said at least one non-undercut portion (13; 28., 29; 4-9, 50), the brake shoe (2; 22; 42; 82; 92) has two oblique side walls forming a flared seating.

24. Brake shoe (62) according to Claim 22, **characterised in that** in said at least one non-undercut portion (67), the brake shoe (62) comprises the lower side wall only.

25. Brake shoe according to Claim 22, **characterised in that** in said at least one non-undercut portion, the brake shoe comprises the upper side wall only.

26. Brake shoe (2; 22; 42; 62; 92) according to any of Claims 22-25, comprising an abutment wall (12; 32; 52; 72; 95) to stop the brake pad (1; 21; 41; 61; 91) at a forward end (7a, 23a, 43a, 63a) thereof in terms of the braking oriented direction (R1).

27. A replacement kit for a bicycle brake, comprising at least one of a brake pad (1; 21; 41; 61; 81; 91) according to one of Claims 1 - 21 and a brake shoe (2; 22; 42; 62; 82; 92) according to one of Claims 22 - 26.

28. Replacement kit according to Claim 27, **characterised in that** the brake pad (61) comprises at least one material-free non-undercut portion (65), and the kit further comprises a shim suitable to be inserted between the brake pad (61) and the brake shoe (62) at said at least one material-free non-undercut portion (65) of the brake pad (61).

29. Bicycle brake comprising at least one of a brake pad (1; 21; 41; 61; 81; 91) according to one of Claims 1 - 21 and a brake shoe (2; 22; 42; 62; 82; 92) according to one of Claims 22 - 26.

30. Method of mounting a brake pad (1; 21; 41; 61; 81; 91) in a brake shoe (2; 22; 42; 62; 82; 92) of a bicycle brake (F), comprising the steps of:
providing a brake pad (1; 21; 41; 61; 81; 91) comprising a braking side (5) and a side (6; 27; 48; 66) for undercut-type coupling to a brake shoe (2; 22; 42; 62; 82; 92), and a brake shoe (2; 22; 42; 62; 82; 92) comprising means (16, 16a, P) for coupling to a bicycle brake (F) and a side for undercut-type coupling to a brake pad (1; 21; 41; 61; 81; 91), the coupling side of at least one of the brake pad (1; 21; 41; 61; 81; 91) and the brake shoe (2; 22; 42; 62; 82; 92) having at least one non-undercut portion (9; 25, 26; 46, 47; 65; 13; 28, 29; 49, 50; 67),
aligning said at least one non-undercut portion (9; 25; 46, 47; 65; 13; 28, 29; 49, 50; 67) with an undercut portion (15; 31; 52, 53; 69; 7; 23, 24; 43, 44; 63) of the other of the brake pad (1; 21; 41; 61; 81; 91) and the brake shoe (2; 22; 42; 62; 82; 92),
inserting the brake pad (1; 21; 41; 61; 81; 91) into the brake shoe (2; 22; 42; 62; 82; 92) in a direction at right angles to a braking direction (R1, R2), and
sliding the brake pad (1; 21; 41; 61; 81; 91) into the brake shoe (2; 22; 42; 62; 82; 92), in the braking direction (R1, R2).

31. Method according to Claim 30, **characterised in that** the said sliding step comprises sliding the brake pad (1; 21; 41; 61; 81; 91) into the brake shoe (2; 22; 42; 62; 82; 92) in the braking oriented direction (R1).

32. Method according to Claim 30 or 31, **characterised in that** the said sliding step comprises sliding the brake pad (1; 21; 41; 61; 81; 91) into the brake shoe (2; 22; 42; 62; 82; 92) until at least one undercut portion (7, 8; 23, 24; 43-45; 63, 64) of the brake pad (1; 21; 41; 61; 81; 91) is inserted into at least one undercut portion (14, 15; 30, 31; 51-53; 68, 69) of the brake shoe (2; 22; 42; 62; 82; 92), and at least one non-undercut portion (9; 25, 26; 46, 47; 65) of the brake pad (1; 21; 41; 61; 81; 91) is inserted into at least one non-undercut portion (13; 28, 29; 49, 50; 67) of the brake shoe (2; 22; 42; 62; 82; 92).

33. Method according to any of Claims 30-32, **characterised in that** the brake pad (1; 21; 41; 61; 81; 91) and the brake shoe (2; 22; 42; 62; 82; 92) each have at least two undercut portions (7, 8; 23, 24; 43-45; 63, 64; 14, 15; 30, 31; 51-53; 68, 69) and at least one non-undercut portion (9; 25, 26; 46, 47; 65; 13; 28, 29; 49, 50; 67) and the alignment step comprises aligning at least one non-undercut portion (9; 25; 46, 47; 65) of the brake pad (1; 21; 41; 61; 81; 91) with an undercut portion (15; 31; 52, 53; 69) of the brake shoe (2; 22; 42; 62; 82; 92), and at least one undercut portion (7; 23, 24; 43, 44; 63) of the brake pad (1; 21; 41; 61; 81; 91) with a non-undercut portion (13; 28, 29; 49, 50; 67) of the brake shoe (2; 22; 42; 62; 82; 92).

34. Method according to any of Claims 30-33, wherein the sliding step comprises bringing a forward end (7a, 23a, 43a, 63a) in terms of the braking oriented direction (R1) of the brake pad (1; 21; 41; 61; 81; 91) into abutment against an abutment shoulder (12; 22; 42; 72; 95) of the brake shoe (2; 32; 52; 62; 82; 92).

35. Method according to any of Claims 30-34, further comprising the step of locking the brake pad (81; 91) to the brake shoe (82; 92) in the braking direction (R1, R2) by means of a split pin (83), a screw (93) or a nail.
